# EUROPEAN PATENT APPLICATION

(11) **EP 4 528 626 A1**
(43) Date of publication of application: **26.03.2025**
(21) Application number: 23816011.3
(22) Date of filing: 29.05.2023
(51) Int. Cl.: G06Q 50/02, A01B 51/00, A01B 69/00, G05D 1/02

(54) **MATERIAL SUPPLY SYSTEM AND MATERIAL SUPPLY METHOD**

(30) Priority: 30.05.2022 JP 2022087422
(71) Applicant: Kubota Corporation, Osaka 556-8601 (JP)
(72) Inventor: TAMATANI, Kenji, Sakai-shi, Osaka 590-0908 (JP)
(74) Representative: Cabinet Beau de Loménie
(86) International application number: PCT/JP2023/019919
(87) International publication number: WO 2023/234254

(57) **Abstract**

A material supply system is a system that causes a transport vehicle to supply an agricultural material for consumption by an agricultural machine in agricultural work. The material supply system includes: a computing device configured to determine a transport start timing for the transport vehicle toward a delivery location of the agricultural material, based on a consumption status of the agricultural material in an agricultural task by the agricultural machine in a field, a position of a storage location of the agricultural material, and a position of the delivery location of the agricultural material.

## Description

### TECHNICAL FIELD

The present disclosure relates to a material supply systems and a material supply methods.

### BACKGROUND ART

As attempts in next-generation agriculture, research and development of smart agriculture utilizing ICT (Information and Communication Technology) and IoT (Internet of Things) are under way. Research and development are also directed to the automation and unmanned use of tractors, rice transplanters, combines, and other agricultural machines to be used in the field. For example, work vehicles that perform agricultural work while automatically traveling in the field by utilizing a positioning system that is capable of precise positioning, e.g., a GNSS (Global Navigation Satellite System), are coming into practical use.

Some agricultural machines are work vehicles that perform agricultural work while consuming agricultural materials such as seedlings, seeds, fertilizers, or chemical agents (which hereinafter may simply be referred to as "materials"). Such work vehicles include, for example, rice transplanters, vegetable transplanters, and tractors having an implement (e.g., a seeder, a spreader, a chemical sprayer, or the like) attached thereto. If a material runs short in the middle of a task being performed by the work vehicle, it becomes necessary to replenish the material.

Patent Document 1 discloses an example of a method of performing efficient replenishment of a material for a work vehicle. In the method disclosed in Patent Document 1, a work vehicle detects a remaining amount of a material carried on itself (e.g., seedlings, seeds, fertilizer, chemical agent, fuel, etc.), and when there is little remaining material, a driver and an assistant worker who makes preparations to replenish the material are alerted. Receiving the alert, after finishing travel along a line of tasked travel within the field, the driver stops the work vehicle near a furrow at which material replenishment is to be performed. On the other hand, receiving the alert, the assistant worker begins preparations for material replenishment. As a result, the material can be replenished, from the furrow to the work vehicle, with ease.

### CITATION LIST

### PATENT LITERATURE

Patent Document 1: Japanese Laid-Open Patent Publication No. 2018-39

### SUMMARY OF INVENTION

### TECHNICAL PROBLEM

In a conventional method of material replenishment for a work vehicle, it is necessary to prepare a sufficient amount of material at a predetermined replenishment position in advance. For example, from a material storage, a sufficient amount of material needs to be transported in advance by using a transport vehicle, and the material needs to be placed at a furrow around the field or at a replenishment position on an agricultural road. However, with such a method, the material may be left at the replenishment position for long periods of time, thus obstructing passage or allowing direct sunlight to dry the material (e.g., seedlings) to result in a degraded quality.

The present disclosure provides a system and a method for solving the aforementioned problems.

### SOLUTION TO PROBLEM

A material supply system according to an embodiment of the present disclosure is a system that causes a transport vehicle to supply an agricultural material for consumption by an agricultural machine in agricultural work. The system includes: a computing device configured to determine a transport start timing for the transport vehicle toward a delivery location of the agricultural material, based on a consumption status of the agricultural material in an agricultural task by the agricultural machine in a field, a position of a storage location of the agricultural material, and a position of the delivery location.

A material supply method according to another embodiment of the present disclosure is a method of causing a transport vehicle to supply an agricultural material for consumption by an agricultural machine in agricultural work. The method includes: acquiring information of a consumption status of the agricultural material in an agricultural task by the agricultural machine in a field, information of a position of a storage location of the agricultural material, and information of a position of a delivery location of the agricultural material, based on the consumption status of the agricultural material, the position of the storage location, and the position of the delivery location, determining a transport start timing for the transport vehicle toward the delivery location, and providing information indicating the transport start timing for a controller to control self-driving of the transport vehicle.

General or specific aspects of the present disclosure may be implemented using devices, systems, methods, integrated circuits, computer programs, non-transitory computer-readable storage media, or any combination thereof. The computer-readable storage media may be inclusive of volatile storage media, or non-volatile storage media. The devices may be composed of a plurality of devices. In the case where the devices is composed of two or more devices, the two or more devices may be provided within a single apparatus, or divided over two or more separate apparatuses.

### ADVANTAGEOUS EFFECTS OF INVENTION

According to embodiments of the present disclosure, it is possible to efficiently supply an agricultural material to an agricultural machine.

### BRIEF DESCRIPTION OF DRAWINGS

[FIG. 1] A block diagram showing an example configuration of a material supply system according to an illustrative embodiment of the present disclosure.
[FIG. 2] A flowchart showing an example of an operation by a computing device.
[FIG. 3] A flowchart showing an example of more detailed operation of acquiring information on a consumption status of an agricultural material.
[FIG. 4] A flowchart showing an example of more detailed operation of a step of determining a transport start timing of a transport vehicle.
[FIG. 5] A flowchart showing another example of an operation by the computing device.
[FIG. 6A] A diagram illustrating an example of an agricultural machine performing agricultural work within a field and a transport vehicle standing by at a storage location of a material.
[FIG. 6B] A diagram schematically showing the transport vehicle having arrived at a delivery location.
[FIG. 6C] A diagram schematically showing a material being delivered from the transport vehicle to the agricultural machine.
[FIG. 6D] A diagram schematically showing a situation where the transport vehicle is on its way of returning to a storage location.
[FIG. 7] A diagram showing an example where the transport vehicle circulates through a route that includes a storage location and a delivery location.
[FIG. 8] A block diagram showing an example configuration for the material supply system.
[FIG. 9] A block diagram showing another example configuration for the material provision system.
[FIG. 10] A block diagram showing still another example configuration for the material provision system.
[FIG. 11A] A diagram showing an example of an overall operation of the material supply system.
[FIG. 11B] A diagram showing an example of an overall operation of another example of the material supply system.
[FIG. 11C] A diagram showing an example of an overall operation of still another example of the material supply system.
[FIG. 12] A diagram showing an example of a work plan for the agricultural machine.
[FIG. 13] A side view showing an example configuration for a rice transplanter.

### DESCRIPTION OF EMBODIMENTS

### (Definition of terms)

In the present disclosure, an "agricultural machine" refers to a machine for agricultural applications. Examples of agricultural machines include tractors, rice transplanters, vegetable transplanters, seeders, spreaders, chemical sprayers, harvesters, combines, vehicles for crop management, mowers, and mobile robots for agriculture. Not only may a work vehicle such as a tractor function as an "agricultural machine" alone by itself, but also a combination of a work vehicle and an implement that is attached to, or towed by, the work vehicle may function as an "agricultural machine". For the ground surface inside a field, the agricultural machine performs agricultural work such as planting of crops, seeding, pest control, manure spreading, tilling, planting of crops, or harvesting. Such agricultural work or tasks may be referred to as "groundwork", or simply as "work" or "tasks". Travel of a vehicle-type agricultural machine performed while the agricultural machine also performs agricultural work may be referred to as "tasked travel". An agricultural machine may have self-driving functionality, or travel via manual driving.

An "agricultural material" means supply to be consumed by agricultural work that is performed by an agricultural machine. Examples of agricultural materials may include crop seedlings, seeds, fertilizers, and chemical agents such as herbicides or insecticides. An agricultural material is carried on an agricultural machine, and is consumed as the agricultural machine performs agricultural work such as planting of a crop, seeding, manure spreading, or chemical spraying.

A "transport vehicle" is a vehicle that is used to transport an agricultural material. Transport vehicles are vehicles that can travel along roads, e.g., trucks (lorries), vans, tractors, passenger autos, or motorcycles, for example. From a previously-determined storage location of an agricultural material, a transport vehicle transports the agricultural material to a delivery location where the agricultural material is supposed to be delivered to an agricultural machine. A transport vehicle may have self-driving functionality, or travel via manual driving.

"Self-driving" refers to controlling the movement of an agricultural machine or a movable unit such as a transport vehicle by the action of a controller, rather than through manual operations of a driver. An agricultural machine that performs self-driving may be referred to as a "self-driving agricultural machine" or a "robotic agricultural machine". During self-driving of an agricultural machine, not only the movement of the agricultural machine, but also the operation of agricultural work (e.g., the operation of the implement) may be controlled automatically. When a vehicle-type agricultural machine or transport vehicle travels via self-driving, it is referred to as "self-traveling". The controller may be configured or programmed to control at least one of: steering that is required in the movement of the vehicle; adjustment of the moving speed; and beginning and ending of a move. In the case of controlling a work vehicle having an implement attached thereto, the controller may control raising or lowering of the implement, beginning and ending of an operation of the implement, and so on. A move based on self-driving may include not only moving of a movable unit that goes along a predetermined path toward a destination, but also moving of a movable unit that follows a target of tracking. A movable unit that performs self-driving may also move partly based on the user's instructions. Moreover, a movable unit that performs self-driving may operate not only in a self-driving mode but also in a manual driving mode, where the movable unit moves through manual operations of the driver. When performed not manually but through the action of a controller, the steering of a movable unit will be referred to as "automatic steering". A portion of, or the entirety of, the controller may reside outside the movable unit. Control signals, commands, data, etc., may be communicated between the movable unit and a controller residing outside the movable unit. A movable unit that performs self-driving may move autonomously while sensing the surrounding environment, without any person being involved in the controlling of the movement of the movable unit. A movable unit that is capable of autonomous movement is able to travel inside the field or outside the field (e.g., on roads) in an unmanned manner. During an autonomous move, operations of detecting and avoiding obstacles may be performed.

### (embodiments)

Hereinafter, embodiments of the present disclosure will be described more specifically. Note however that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of claims. In the following description, component elements having identical or similar functions are denoted by identical reference numerals.

The following embodiments are only exemplary, and the technique according to the present disclosure is not limited to the following embodiments. For example, numerical values, shapes, materials, steps, and orders of steps, layout of a display screen, etc., that are indicated in the following embodiments are only exemplary, and allow for various modifications so long as it makes technological sense. Any one implementation may be combined with another so long as it makes technological sense to do so.

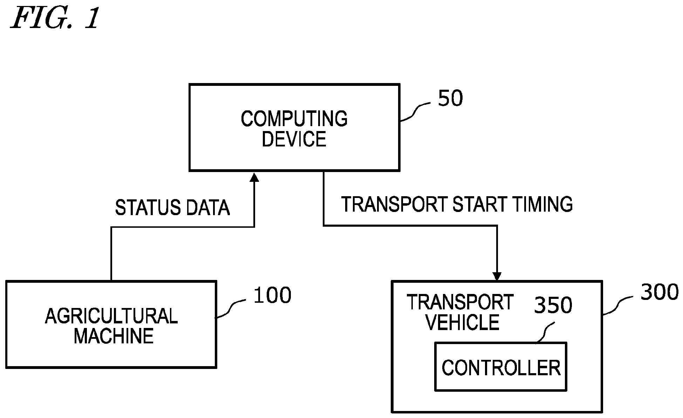

FIG. 1 is a block diagram showing an example configuration of a material supply system according to an illustrative embodiment of the present disclosure. The material supply system is a system that causes a transport vehicle **300** to supply an agricultural material for consumption by an agricultural machine **100** in agricultural work. The material supply system shown in FIG. **1** includes a computing device **50,** an agricultural machine **100,** and a transport vehicle **300.** In the example of FIG. **1****,** the agricultural machine **100** and the transport vehicle **300** are included in the material supply system. However, the agricultural machine **100** and the transport vehicle **300** may be external elements to the material supply system.

The agricultural machine **100** may be a work vehicle that performs tasked travel while consuming an agricultural material within a field. For example, the agricultural machine **100** may be a transplanter that travels while planting seedlings of a plant in the field, e.g., a riding rice transplanter or a vegetable transplanter. In that case, agricultural materials including seedlings of the plant are to be carried on the agricultural machine **100.** In addition to seedlings of the plant, other materials such as a fertilizer may also be carried on the agricultural machine **100.** Without being limited to a transplanter, the agricultural machine **100** may be a work vehicle that performs other kinds of agricultural work, such as seeding, manure spreading, or pest control. For example, the agricultural machine **100** may be a tractor or a vehicle for crop management, having attached thereto an implement that is configured to perform agricultural work such as seeding, manure spreading, or pest control. While consuming an agricultural material such as crop seedlings, seeds, fertilizers, herbicides, or insecticides, for example, the agricultural machine **100** performs tasked travel within the field. The agricultural machine **100** has a function of communicating with the computing device **50.** The agricultural machine **100** may be configured to, while performing tasked travel, transmit data representing the consumption status (consumed amount, remaining amount, etc.) of a material, or data to be referred to for estimating the consumption status of a material (e.g., the position or traveling speed of the agricultural machine **100)** to the computing device **50,** for example. In the present specification, such data may be referred to as "status data". The agricultural machine **100** travels via self-driving or manual driving.

The transport vehicle **300** is a vehicle that transports materials such as crop seedlings, fertilizers, or agrochemicals. The transport vehicle **300** may be a vehicle that is suitable for material transportation, e.g., a truck (lorry) or a van, for example. The transport vehicle **300** has the function of communicating with the computing device **50,** and self-driving functionality. In the example of FIG. **1****,** the transport vehicle **300** includes a controller **350** to control self-driving travel. The controller **350** may be implemented by an electronic control unit (ECU) that is provided in the transport vehicle **300,** for example. Although the transport vehicle **300** may include a positioning device including a GNSS receiver, a camera(s), and/or LiDAR (Light Detection and Ranging) or other sensors, such component elements are omitted from illustration in FIG. **1****.**

The controller **350** may be provided on or in a device that is external to the transport vehicle **300.** For example, a computer, e.g., a server, that communicates with the transport vehicle **300** may have the functionality of the controller **350.** In that case, the transport vehicle **300** travels in accordance with a command from the external controller. Through the action of the controller **350,** the transport vehicle **300** transports a material, from a storage location of the material to a delivery location of the material, via self-driving.

A storage location of a material is a previously determined place, such as a material storage, for example. A delivery location of a material is a predetermined place such as an agricultural road or a furrow around the field, for example. The delivery location may be a fixed place that is set for each field, or may be a place that is set in accordance with work situation of the agricultural machine **100.** Based on information indicating a transport start timing that is acquired from the computing device **50,** the transport vehicle **300** automatically begins transportation of the material.

The computing device **50** may be a circuit or a computer that includes: one or more processors such as a CPU (Central Processing Unit), a GPU (Graphics) Processing Unit), or an FPGA (Field Programmable Gate Array); and one or more storage media such as a memory(s), for example. The computing device **50** may be provided in a computer, e.g., a server, that is provided at a remote place from the agricultural machine **100** and the transport vehicle **300.** Alternatively, the computing device **50** may be provided in the agricultural machine **100** or the transport vehicle **300.** For example, an ECU provided in the agricultural machine **100** or the transport vehicle **300** may function as the computing device **50.** Thus, the computing device **50** may be mounted in or on the agricultural machine **100,** the transport vehicle **300,** or a computer that communicates with the agricultural machine **100** and the transport vehicle **300.**

The computing device **50** determines a transport start timing at which the transport vehicle **300** is to begin transportation of the agricultural material. For example, the computing device **50** determines the transport start timing for the transport vehicle toward the delivery location, based on the consumption status of the agricultural material in an agricultural task by the agricultural machine **100** in the field, the position of a storage location of the agricultural material, and the position of a delivery location of the agricultural material. The computing device **50** sends information indicating information indicating the determined transport start timing to the transport vehicle **300.** At the transport start timing, the transport vehicle **300** begins self-traveling from the storage location to the delivery location of the material.

The consumption status of the agricultural material may be determined or estimated based on status data that is received from the agricultural machine **100.** The status data may be, for example, data representing a remaining amount of the material carried on the agricultural machine **100** or a position or a moving speed of the agricultural machine **100.** Based on the status data, the computing device **50** can determine the remaining amount of the material carried on the agricultural machine **100,** and estimate how much more distance or time the tasked travel is still possible. Based on the estimated distance or time, the computing device **50** can estimate at least one of: a timing (time of depletion) at which the material becomes depleted; and a position (point of depletion) of the agricultural machine **100** at which the material becomes depleted. As used herein, when the "material becomes depleted", it is meant that remaining amount of the material becomes equal to or less than a predetermined threshold (e.g., a value close to 0).

The position of the storage location and the position of the delivery location are previously set, and the positional information thereof may be recorded in a storage that is internal or external to the computing device **50.** The position of the delivery location may not be at a fixed position, and may be determined in accordance with the state of the agricultural machine **100.** For example, the computing device **50** may set a delivery location near a point of depletion at which the material carried on the agricultural machine **100** is estimated to become depleted. In that case, in addition to information indicating the transport start timing, the computing device **50** may transmit positional information of the delivery location to the transport vehicle **300.**

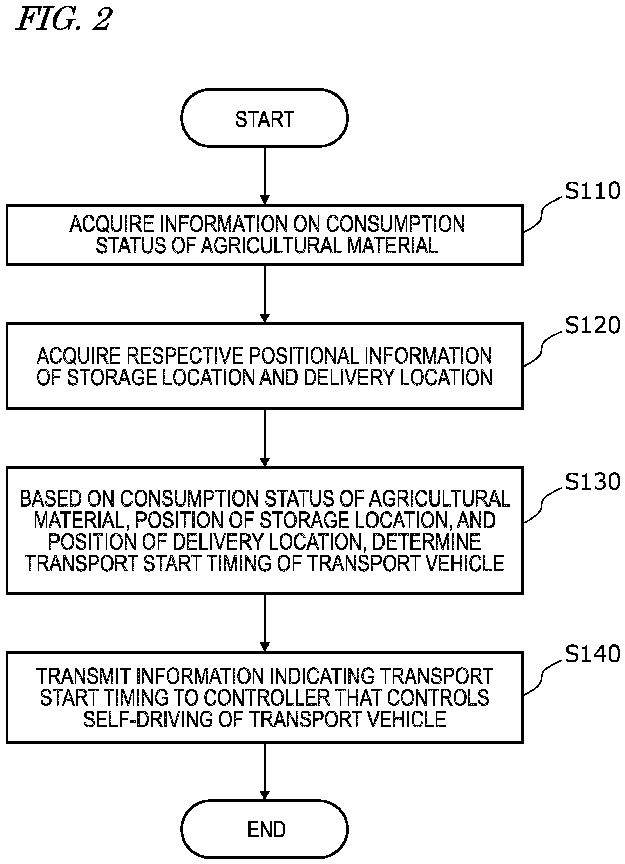

FIG. **2** is a flowchart showing an example of an operation by the computing device **50.** The computing device **50** in this example performs the operations from steps **S110** to **S140** shown in FIG. **2****.** Hereinafter, the operation of each step will be described.

At step **S110,** the computing device **50** acquires information on the consumption status of the agricultural material. Information on the consumption status of the agricultural material may be information indicating the consumed amount or remaining amount of the material, for example. The computing device **50** monitors the state of the agricultural machine **100,** and based on the state of the agricultural machine **100,** determines or estimates the consumption status of the agricultural material. The state of the agricultural machine **100** to be monitored may be the remaining amount of the material carried on the agricultural machine **100,** the position of the agricultural machine **100,** the traveling speed of the agricultural machine **100,** or the like, for example. Based on status data that is consecutively transmitted from the agricultural machine **100** while the agricultural machine **100** is performing tasked travel, the computing device **50** determines the consumption status of the agricultural material. The status data may include data representing a remaining amount of the material as measured by a sensor that is mounted on the agricultural machine **100,** for example. In that case, the computing device **50** can immediately determine the consumption status of the material from the data representing the remaining amount of the material transmitted from the agricultural machine **100.** Alternatively, the status data may include information of the position of the agricultural machine **100** as measured by a positioning device included in the agricultural machine **100.** Furthermore, the status data may include information of the moving speed of the agricultural machine **100.** Based on the information of the position or moving speed of the agricultural machine **100** consecutively acquired from the agricultural machine **100,** the computing device **50** can estimate the consumed amount or remaining amount of the material.

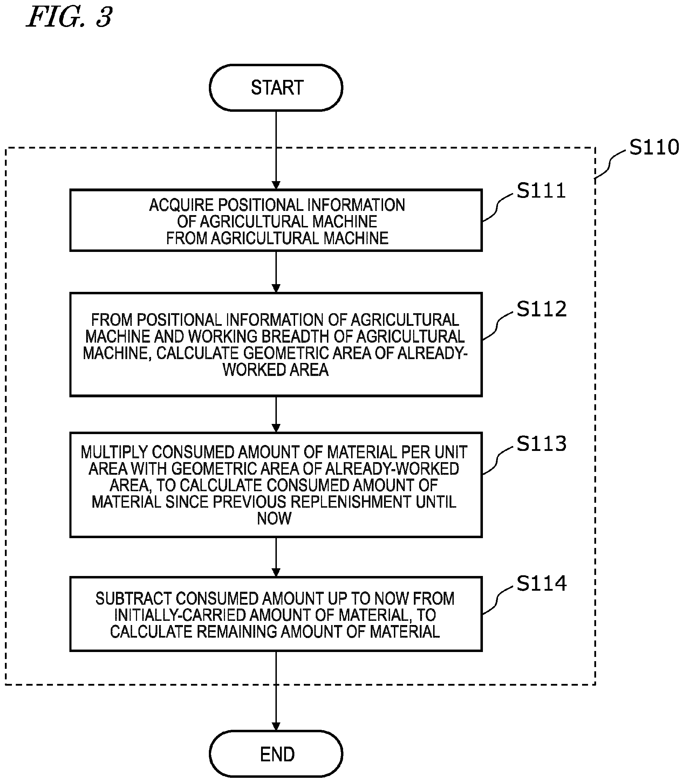

FIG. **3** is a flowchart showing an example of more detailed operation of step **S110.** In the example shown in FIG. **3****,** the computing device **50** monitor the position of the agricultural machine **100,** and based on the position of the agricultural machine **100,** estimates the consumption status of the agricultural material. In the example of FIG. **3****,** step **S110** includes steps **S111** to **S114.**

At step **S111,** the computing device **50** acquires chronological data of the position of the agricultural machine **100** from the agricultural machine **100.** With a fixed cycle, for example, the agricultural machine **100** transmits information indicating the position of the agricultural machine **100** as measured by a positioning device, e.g., a GNSS receiver, to the computing device **50.** As a result, the computing device **50** is able to acquire chronological data of the position of the agricultural machine **100.**

At step **S112,** from the chronological data of the position of the agricultural machine **100** and the working breadth of the agricultural machine **100,** the computing device **50** calculates the geometric area of an already-worked area for which the work has been completed. Specifically, from the chronological data of position, the computing device **50** determines a distance that has been traveled by the agricultural machine **100** while performing a task that involves consumption of the material since the last time the material was replenished and until now, and by multiplying the distance with the working breadth, calculates a geometric area of the already-worked area. Herein, the working breadth of the agricultural machine **100** is known, and the information thereof is recorded in the storage in advance.

At step **S113,** the computing device **50** calculates a consumed amount of the material by multiplying the consumed amount of the material per unit area with the geometric area of the already-worked area. The consumed amount of the material per unit area is known, and the information thereof is recorded in the storage in advance.

At step **S114,** the computing device **50** calculates a remaining amount of the material by subtracting the consumed amount up to now from an initially-carried amount of the material. The initially-carried amount of the material is known, and the information thereof is recorded in the storage in advance.

With the above method, the computing device **50** can acquire information of the remaining amount of the material, as information indicating the consumption status of the material. Note that the operation shown in FIG. **3** is an example, and the consumption status of the material may be estimated by other methods. For example, in a case where the agricultural machine **100** is a self-driving agricultural machine and performs self-traveling along a target path that is set within the field, the geometric area of the already-worked area can be determined based on information of the target path and on the current position of the agricultural machine **100.**

At step **S120** shown in FIG. **2****,** the computing device **50** acquires respective positional information of the storage location and the delivery location. The positions of the storage location and the delivery location are known, and the positional information thereof is recorded in the storage in advance. Note that the position of the delivery location may be changed in accordance with the position of the agricultural machine **100.** For example, based on the consumption status of the agricultural material, the work path of the agricultural machine **100,** and the position and moving speed of the agricultural machine **100,** the computing device **50** may estimate a point of depletion at which the remaining amount of the agricultural material becomes smaller than a predetermined amount, and determine a delivery location in accordance with the point of depletion. Through such operation, a place near the point of depletion can be set as a delivery location, such that the movement of the agricultural machine **100** for material replenishment can be reduced. Step **S120** may be performed before step **S110,** or concurrently with step **S110.**

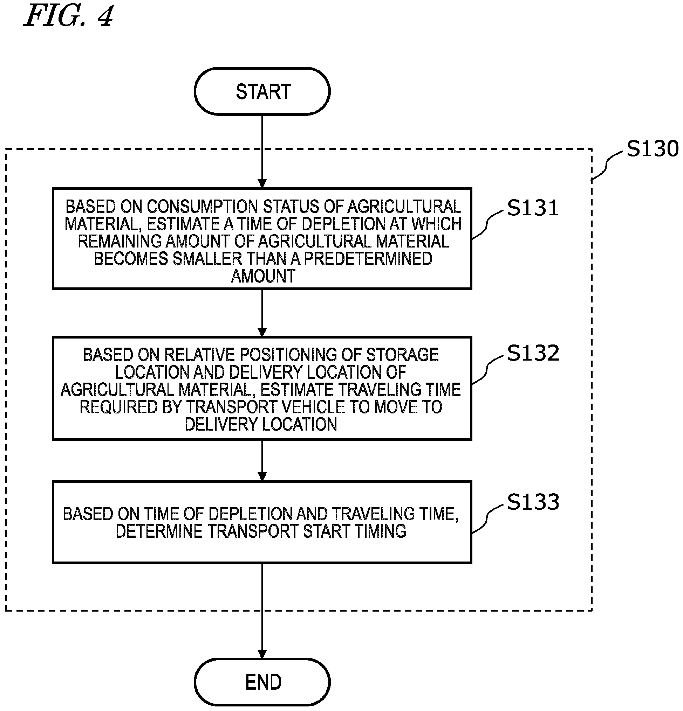

At step **S130,** based on the consumption status of the agricultural material, the position of the storage location, and the position of the delivery location, the computing device **50** determines a transport start timing of the transport vehicle **300** toward the delivery location. For example, the computing device **50** may determine the transport start timing by performing a process shown in FIG. **4****.**

FIG. **4** is a flowchart showing a specific example of the operation of step **S130.** In the example of FIG. **4****,** step **S130** includes steps **S131 to S133.**

At step **S131,** based on the consumption status of the agricultural material, the computing device **50** estimates a time of depletion at which the remaining amount of the agricultural material becomes smaller than a predetermined amount. For example, first, based on the moving speed of the agricultural machine **100,** the working breadth of the agricultural machine **100,** and the consumed amount of the material per unit area, the computing device **50** calculates a consumed amount of the material per unit time. Next, by dividing the current remaining amount of the material with the consumed amount of the material per unit time, the computing device **50** calculates an amount of time left until the material will become depleted, thus estimating a time of depletion.

At step **S132,** based on a relative positioning of the storage location of the agricultural material and the delivery location of the agricultural material, the computing device **50** estimates a traveling time required by the transport vehicle **300** in order to move to the delivery location. For example, the computing device **50** first reads an environment map including information on roads around the field from the storage, and based on the environment map, determines a path from the storage location to the delivery location. Next, the computing device **50** calculates an amount of time required by the transport vehicle **300** in order to travel from the storage location to the delivery location along the path. For example, assuming that the transport vehicle **300** travels at a certain average speed, the computing device **50** may divide the overall length of the path by the average speed to calculate the traveling time of the transport vehicle **300.** Note that step **S132** may be performed before step **S131,** or simultaneously with the step **S131.**

At step **S133,** based on the estimated time of depletion and traveling time, the computing device **50** determines a transport start timing. More specifically, as the transport start timing, the computing device **50** determines a timing before a point in time that is derived by subtracting the traveling time from the time of depletion. For example, the computing device **50** may determine as the transport start timing a point in time that is derived by subtracting from the time of depletion an amount of time that results by multiplying the traveling time with a coefficient of one or greater. Alternatively, the computing device **50** may determine as the transport start timing a point in time which is a predetermined amount of time earlier than a point in time that is derived by subtracting the traveling time from the time of depletion.

After step **S133,** the process proceeds to step **S140** shown in FIG. **2****.** At step **S140,** the computing device **50** transmits information indicating the transport start timing to the controller **350,** which controls self-driving of the transport vehicle **300.** For example, the computing device **50** may transmit to the controller **350** of the transport vehicle **300** a traveling command including information of the transport start timing. Upon acquiring information indicating the transport start timing, the controller **350** initiates self-traveling from the storage location to the delivery location at the transport start timing. As a result, while carrying the material, the transport vehicle **300** begins self-traveling from the storage location to the delivery location.

In the above operation, the amount of time after the transport vehicle **300** leaves the storage location and until the material carried on the agricultural machine **100** becomes depleted is longer than the traveling time for the transport vehicle **300** to reach the delivery location after leaving the storage location. Therefore, the transport vehicle **300** is able to arrive at the delivery location before the material carried on the agricultural machine **100** becomes depleted. Once the transport vehicle **300** arrives at the delivery location, the agricultural machine **100** stops the work and heads for the delivery location. At the delivery location, the material is delivered from the transport vehicle **300** to the agricultural machine **100.** According to the present embodiment, there is no need to prepare large amounts of material at the delivery location in advance, and an amount of material that is needed by the agricultural machine **100** can be transported to the transport vehicle **300** at an appropriate timing. Therefore, the problems associated with the material being left at the delivery location (i.e., the replenishment point) for long periods of time to obstruct passage, or the quality of the material being degraded by direct sunlight, can be solved.

Note that the operation shown in FIG. **2** is only an example, and a different operation from the operation shown in FIG. **2** may be performed. For example, after determining the transport start timing at step **S130,** the computing device **50** may determine a loading start timing at which to begin loading of the agricultural material onto the transport vehicle **300.** The computing device **50** may transmit information indicating the determined loading start timing to a terminal device that is used by a worker to perform the work of loading the material onto the transport vehicle **300.** Hereinafter, an example of such an operation will be described.

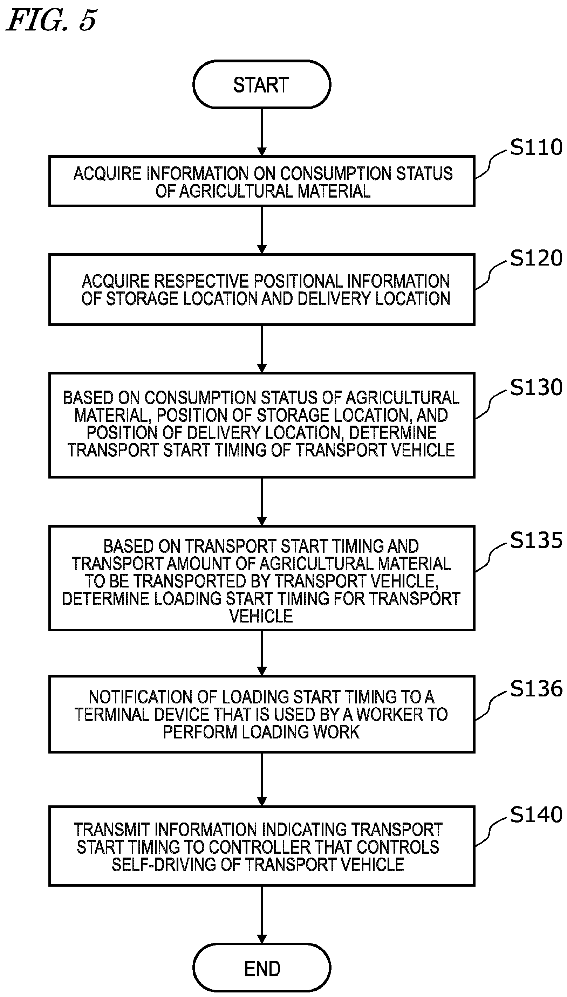

FIG. **5** is a flowchart showing a variation of the operation shown in FIG. **2****.** In the flowchart shown in FIG. **5****,** steps **S135** and **S136** are added between step **S130** and step **S140.** Otherwise, it is identical to the operation shown in FIG. **2****.**

At step **S135,** the computing device **50** determines a loading start timing for the transport vehicle **300** based on the transport start timing and a transport amount of the agricultural material to be transported by the transport vehicle **300.** The transport amount of agricultural material to be transported by the transport vehicle **300** is previously set, and is recorded in the storage. Based on this transport amount, the computing device **50** estimates a loading time required for loading the agricultural material onto the transport vehicle **300,** and determines, as the loading start timing, a timing before a point in time that is derived by subtracting the loading time from the transport start timing. For example, the computing device **50** may determine, as the loading start timing, a point in time that is derived by subtracting from the transport start timing an amount of time that results by multiplying the loading time with a coefficient of one or greater. Alternatively, the computing device **50** may determine, as the loading start timing, a point in time which is a predetermined amount of time earlier than a point in time that is derived by subtracting the loading time from the transport start timing.

At step **S136,** the computing device **50** provides a notification of the loading start timing to a terminal device that is used by a worker to perform the loading work. This allows the worker to know that loading of the material onto the transport vehicle **300** may be begun at the notified loading start timing. At step **S136,** in addition the loading start timing, the computing device **50** may also provide a notification of the transport start timing to the terminal device. This allows the worker to know that the loading work needs to be completed by the transport start timing.

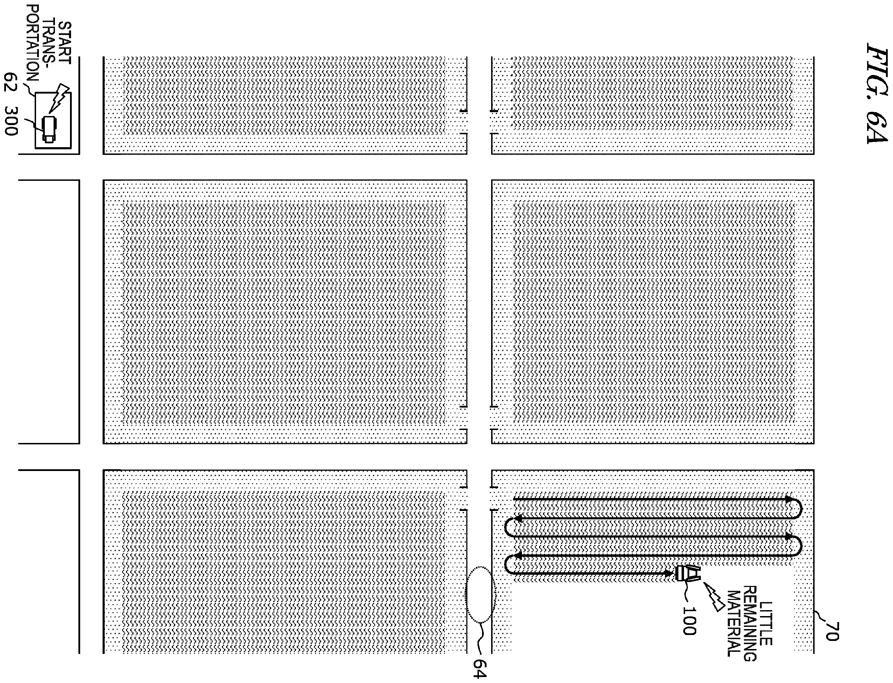

Next, with reference to FIGS. **6A** to **6D****,** a more specific example of the operation by the material supply system will be described.

FIG. **6A** is a diagram illustrating an example of the agricultural machine **100** performing agricultural work within a field **70** and a transport vehicle **300** standing by at a storage location **62** of the material. The field **70** in this example is a paddy field; the agricultural machine **100** is a riding rice transplanter; the material is seedlings of a rice plant; and the transport vehicle **300** is a self-driving truck. The storage location **62** is a storage that is provided in order to store crop seedlings or other materials. A warehouse at a home or an office, etc., of the user of the agricultural machine **100** may be utilized as the storage location **62.** Without being limited to existing in one place, storage locations **62** may exist in a plurality of places. The agricultural machine **100** performs rice planting work while traveling along a predetermined path within the field **70.** Arrows in the field **70** in FIG. **6A** illustrate a traveling locus of the agricultural machine **100.** As shown in FIG. **6A****,** the agricultural machine **100** performs seedling planting work while repetitively reciprocating within the field **70.**

While carrying a material (which in this example is seedlings of a rice plant), the transport vehicle **300** shown in FIG. **6A** is standing by at the storage location **62** of the material. As described earlier, from the computing device **50,** information indicating the transport start timing of the material is sent to the controller **350** of the transport vehicle **300.** When the remaining amount of the material carried on the agricultural machine **100** becomes small and it is the transport start timing, the transport vehicle **300** begins transporting the material to a delivery location **64** of the material. In this example, the delivery location **64** is set in an agricultural road around the field **70.**

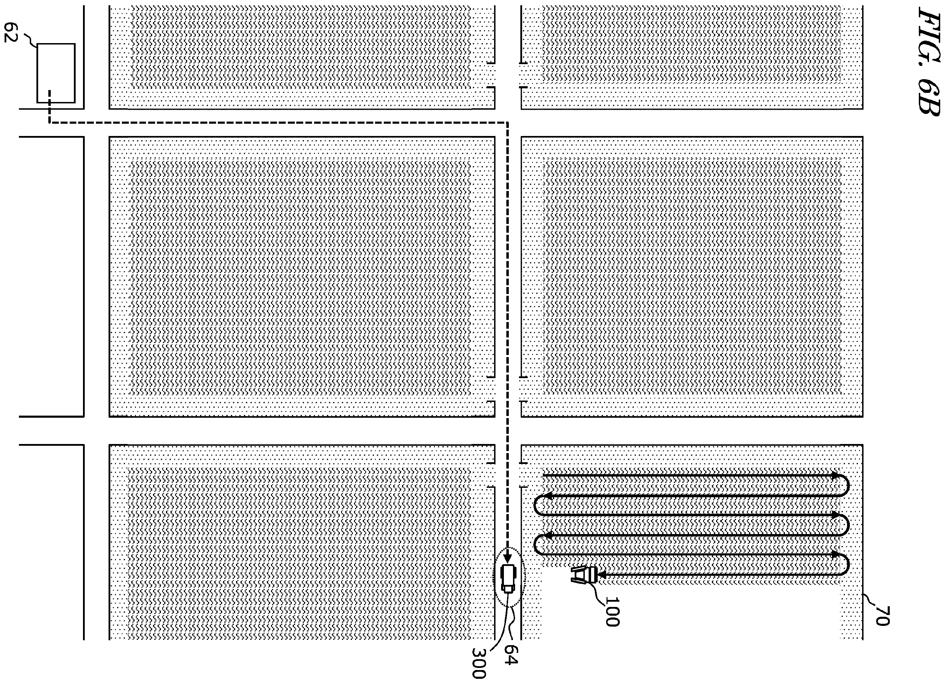

FIG. **6B** is a diagram schematically showing the transport vehicle **300** having arrived at the delivery location **64.** A broken arrow in FIG. **6B** illustrates a traveling locus of the transport vehicle **300** along agricultural roads. As described earlier, the transport vehicle **300** arrives at the delivery location **64** before the material carried on the agricultural machine **100** becomes depleted.

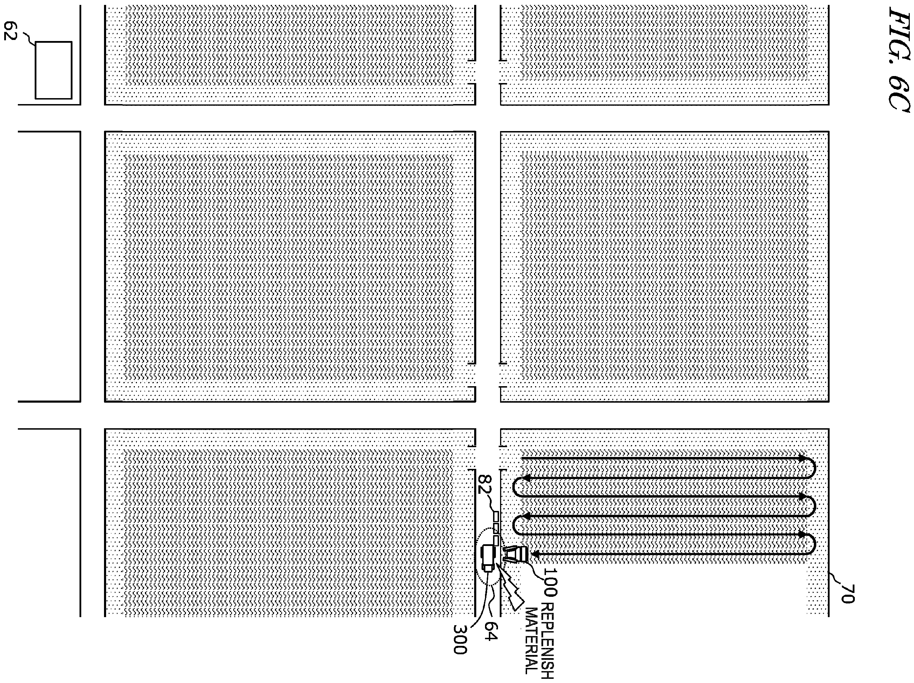

FIG. **6C** is a diagram schematically showing a material **82** being delivered from the transport vehicle **300** to the agricultural machine **100.** At the delivery location **64,** unloading of the material **82** from the transport vehicle **300** and replenishment of the material **82** for the agricultural machine **100** are performed. For example, this work may be performed by a worker such as a driver of the agricultural machine **100** or an assistant. When replenishment of the material **82** for the agricultural machine **100** is completed, the worker operates a device, such as control equipment of the transport vehicle **300** or a mobile terminal, to return the transport vehicle **300** to the storage location **62.** In other words, after unloading of the agricultural material **82** from the transport vehicle **300** is completed at the delivery location **64,** the controller **350** of the transport vehicle **300** initiates self-traveling from the delivery location **64** to the storage location **62,** in response to a command from a device that is operated by a user (e.g., a worker). As a result, the transport vehicle **300** returns to the storage location **62** via self-driving.

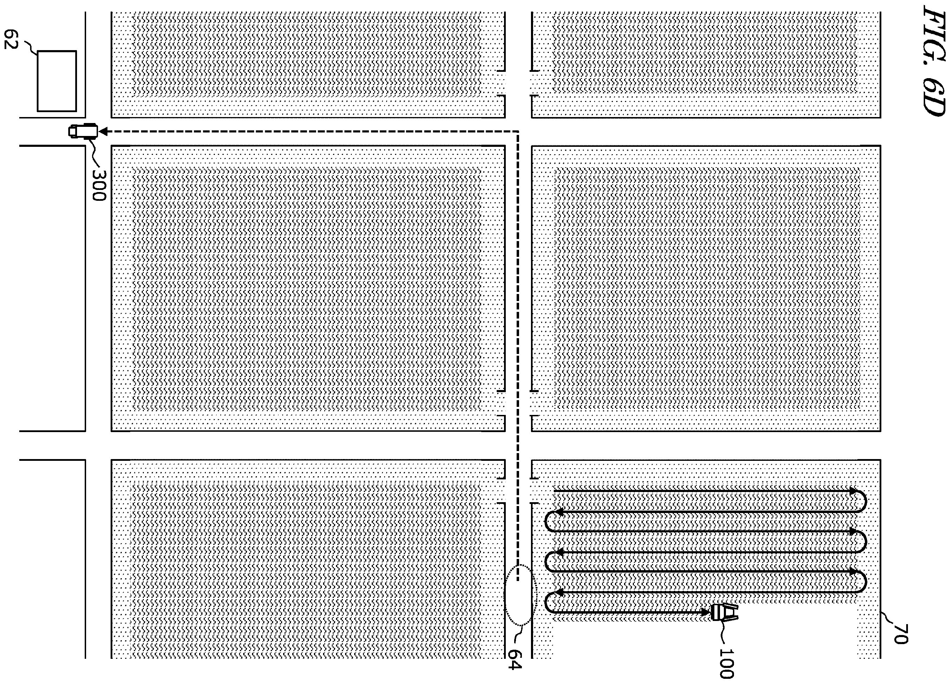

FIG. **6D** is a diagram schematically showing a situation where the transport vehicle **300** is on its way of returning to the storage location **62.** After delivery of the material is completed, in response to a command from a device that is operated by the user, the transport vehicle **300** performs self-traveling toward the storage location **62.** In the example of FIG. **6D****,** the transport vehicle **300** follows the same path as the path (forward path) shown in FIG. **6B** to return to the storage location **62.** The transport vehicle **300** may return to the storage location **62** via a different path from the forward path. For example, the controller **350** of the transport vehicle **300** may control the self-traveling of the transport vehicle **300** so as to circulate through a route that includes the storage location **62** and the delivery location **64,** based on a previously-set operating schedule of the transport vehicle **300.**

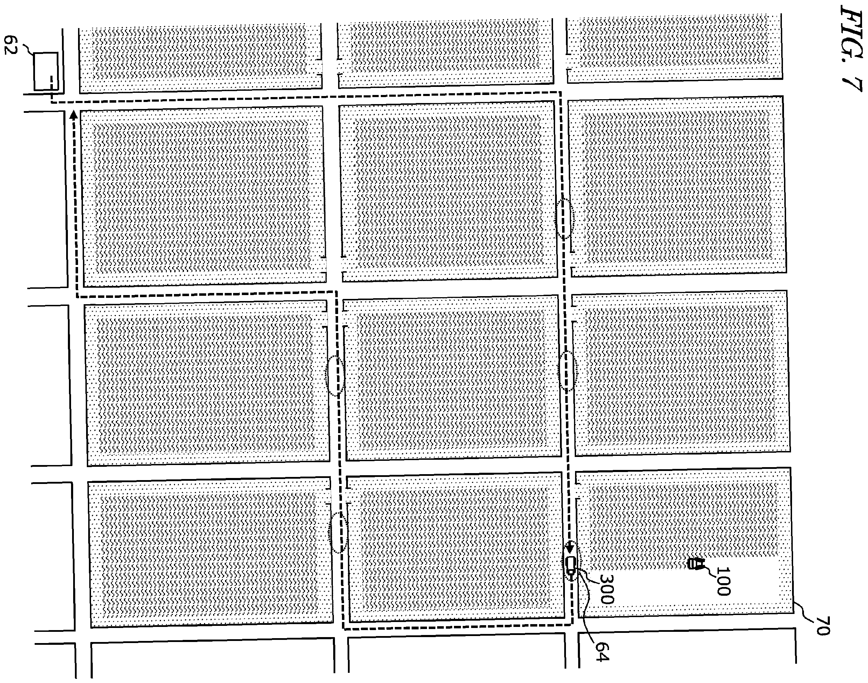

FIG. **7** is a diagram showing an example where the transport vehicle **300** circulates through a route that includes the storage location **62** and the delivery location **64.** In FIG. **7****,** a number of dotted ellipses depict examples of delivery locations **64** for the material. In this example, a delivery location **64** is set for each of a plurality of fields **70** in which agricultural work is to be performed by the agricultural machine **100.** The agricultural machine **100** in this example visits the plurality of fields **70** in order to perform agricultural work (e.g., rice planting). Because the amount of material that can be carried on the agricultural machine **100** in one time is limited, material replenishment becomes necessary while agricultural work is performed in each field **70.** With the timing that the agricultural machine **100** needs material replenishment, the transport vehicle **300** transports the material to each delivery location **64.** As shown by broken arrows in in FIG. **7****,** the transport vehicle **300** circulates through a route that includes the storage location **62** of the material and one or more delivery locations **64.** In this example, the computing device **50** instructs the transport vehicle **300** so that the transport vehicle **300** visits each delivery location **64** with the timing that material replenishment for the agricultural machine **100** becomes necessary in each field **70.** As a result, material replenishment for the agricultural machine **100** can be achieved in a timely manner.

In the example of FIG. **7****,** one agricultural machine **100** successively performs agricultural work in the plurality of fields **70.** Without being limited to this implementation, a plurality of agricultural machines may perform agricultural work in a field that it is assigned to, for example. In that case, the transport vehicle **300** is controlled so that, with the timing that material replenishment for the agricultural machine in each field becomes necessary, it transports the material to the delivery location for that field. A plurality of transport vehicles may be controlled to more efficiently perform transportation of the material to a plurality of delivery locations.

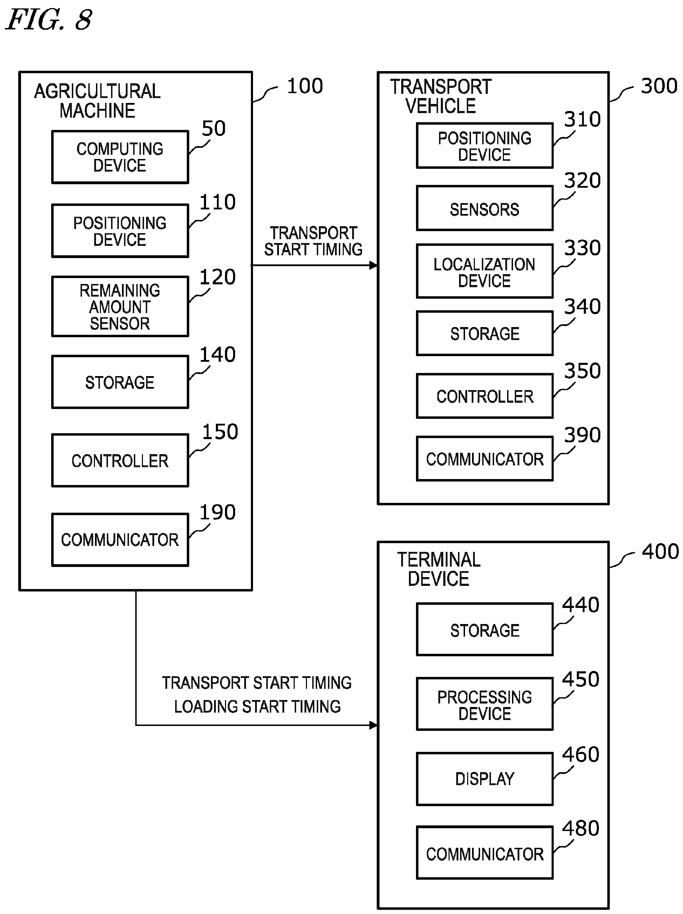

Next, with reference to FIG. **8** to FIG. **10****,** some variations for the configuration of the material supply system will be described.

FIG. **8** is a block diagram showing an example where the material supply system includes the agricultural machine **100,** the transport vehicle **300,** and a terminal device **400.** In this example, the computing device **50** shown in FIG. **1** is mounted in or on the agricultural machine **100.**

The agricultural machine **100** includes the computing device **50,** a positioning device **110,** a remaining amount sensor **120,** a storage **140,** a controller **150,** and a communicator **190.** The positioning device **110** may include a GNSS receiver, for example. The GNSS receiver receives satellite signals that are transmitted from a plurality of GNSS satellites, and performs positioning based on the satellite signals. GNSS is a collective term for satellite positioning systems such as GPS (Global Positioning System), QZSS (Quasi-Zenith Satellite System), GLONASS, Galileo, and BeiDou. The positioning device **110** may include an inertial measurement unit (IMU). The IMU can measure a tilt or a small motion of the agricultural machine **100.** The data acquired by the IMU can be used to complement the position data based on the satellite signals, so as to improve the performance of positioning. The remaining amount sensor **120** measures the remaining amount of the material carried on the agricultural machine **100.** The remaining amount sensor **120** is a sensor to measure a physical parameter that varies with the remaining amount of the material, e.g., the weight or volume of the material, for example. The storage **140** stores a computer program to be executed by the computing device **50,** data to be referred to by the computing device **50,** and data generated by the computing device **50.** The controller **150** controls travel and task operations of the agricultural machine **100.** The controller **150** may be implemented as a device including a processor, e.g., an ECU. The communicator **190** transmits a signal generated by the computing device **50** to the transport vehicle **300** and the terminal device **400.**

The transport vehicle **300** includes a positioning device **310,** sensors **320,** a localization device **330,** a storage **340,** the controller **350,** and a communicator **390.** The positioning device **310** includes a GNSS receiver. The sensors **320** include a plurality of sensors, such as a camera(s), a LiDAR sensor, and an ultrasonic sensor, for example. The sensors **320** are used for localization obstacle detection. The localization device **330** is a device to estimate the position of the transport vehicle **300** itself based on sensor data acquired by the sensors **320** and an environment map that is stored in the storage **340.** The localization device **330** may include one or more processors and one or more memories. The storage **340** stores a computer program to be executed by the controller **350,** data to be referred to by the controller **350,** and data generated by the controller **350.** The communicator **390** receives a signal transmitted from the agricultural machine **100.**

The terminal device **400** is a device to be used by a worker who performs loading work of the material for the transport vehicle **300** at a storage location of the material. The terminal device **400** may be any computer such as a smartphone, a tablet computer, a desktop computer, or a laptop, for example. The terminal device **400** includes a storage **440,** a processing device **450,** a display **460,** and a communicator **480.** The storage **440** stores a computer program to be executed by the processing device **450,** data to be referred to by the processing device **450,** and data generated by the processing device **450.** The communicator **390** receives a signal transmitted from the agricultural machine **100.**

In the example of FIG. **8****,** with the aforementioned method, the computing device **50** in the agricultural machine **100** determines the transport start of the timing transport vehicle **300** and the loading start timing of the material. In other words, the computing device **50** determines the transport start timing based on: the consumption status of the material as determined or estimated based on a signal that is output from the positioning device **110** or the remaining amount sensor **120;** and positional information of the storage location and the delivery location recorded in the storage **140.** Furthermore, the computing device **50** determines the loading start timing based on the transport start timing and the transport amount of the material to be transported by the transport vehicle **300.** The transport amount of the material to be transported by the transport vehicle **300** is previously set, and recorded in the storage **140.** The computing device **50** transmits information of the transport start timing to the transport vehicle **300** via the communicator **190.** Moreover, the computing device **50** transmits a notification including information of the loading start timing and the transport start timing to the terminal device **400,** via the communicator **190.** When the communicator **480** receives the notification from the agricultural machine **100,** the processing device **450** of the terminal device **400** causes the display **460** to display the loading start timing and the transport start timing. Based on the displayed information, the worker performs loading of the material onto the transport vehicle **300,** between the loading start timing and the transport start timing. After loading of the material is completed, the worker may operate the terminal device **400** or control equipment of the transport vehicle **300** to provide a notification to the controller **350** of the transport vehicle **300** that loading has been completed. The controller **350** of the transport vehicle **300** begins self-traveling toward the delivery location at the transport start timing as determined by the computing device **50.** Thus, the controller **350** may begin self-traveling toward the delivery location upon receiving a notification that loading of the agricultural material onto the transport vehicle **300** has been completed at the storage location and upon acquiring information indicating the transport start timing. This can prevent the transport vehicle **300** from beginning transport before loading of the material is completed. If loading of the material onto the transport vehicle **300** is not completed at the transport start timing, the controller **350** of the transport vehicle **300** may transmit an alert to the terminal device **400** or the agricultural machine **100.** This makes it possible to call the attention of the user of the terminal device **400** or the worker for the agricultural machine **100** that loading work is behind.

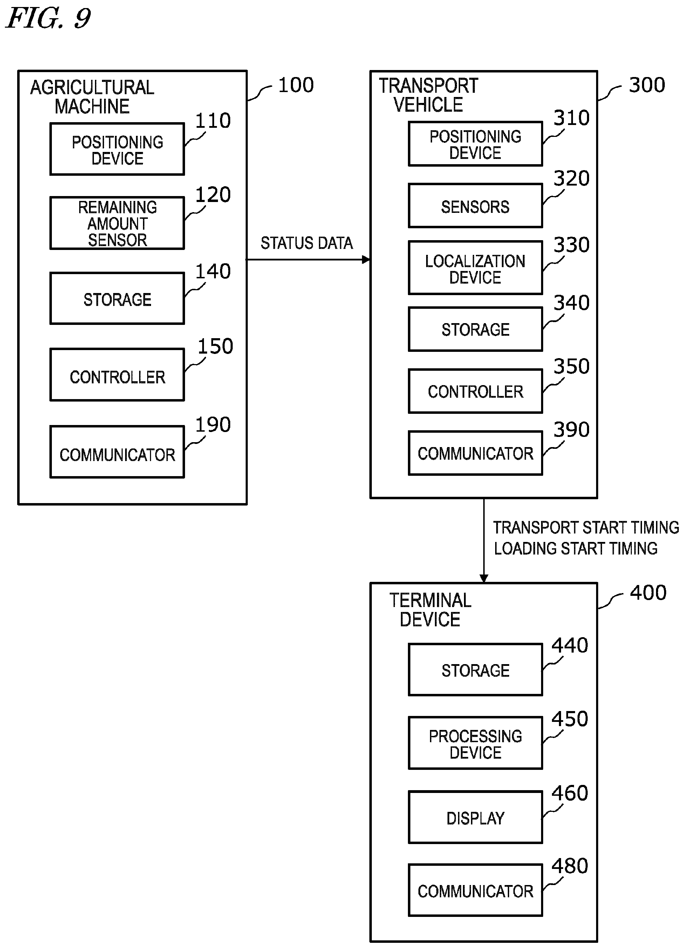

FIG. **9** is a block diagram showing another example configuration for the material provision system. In the example shown in FIG. **9****,** the computing device **50** is mounted not in the agricultural machine **100** but in the transport vehicle **300.** Otherwise, the configuration shown in FIG. **9** is identical to the configuration shown in FIG. **8****.**

In the example of FIG. **9****,** with the aforementioned method, the computing device **50** in the transport vehicle **300** determines the transport start of the timing transport vehicle **300** and the loading start timing of the material. In other words, the computing device **50** determines the transport start timing based on: the consumption status of the material as estimated based on status data including a signal that is output from the positioning device **110** or the remaining amount sensor **120** of the agricultural machine **100;** and positional information of the storage location and the delivery location recorded in the storage **340.** Furthermore, the computing device **50** determines the loading start timing based on the transport start timing and the transport amount of the material to be transported by the transport vehicle **300.** The transport amount of the material to be transported by the transport vehicle **300** is previously set, and recorded in the storage **340.** The computing device **50** transmits a notification including information of the loading start timing and the transport start timing to the terminal device **400,** via the communicator **390.** Based on the displayed information, the worker using the terminal device **400** begins loading of the material onto the transport vehicle **300.** After loading of the material is completed, the controller **350** of the transport vehicle **300** begins self-traveling toward the delivery location at the transport start timing as determined by the computing device **50.**

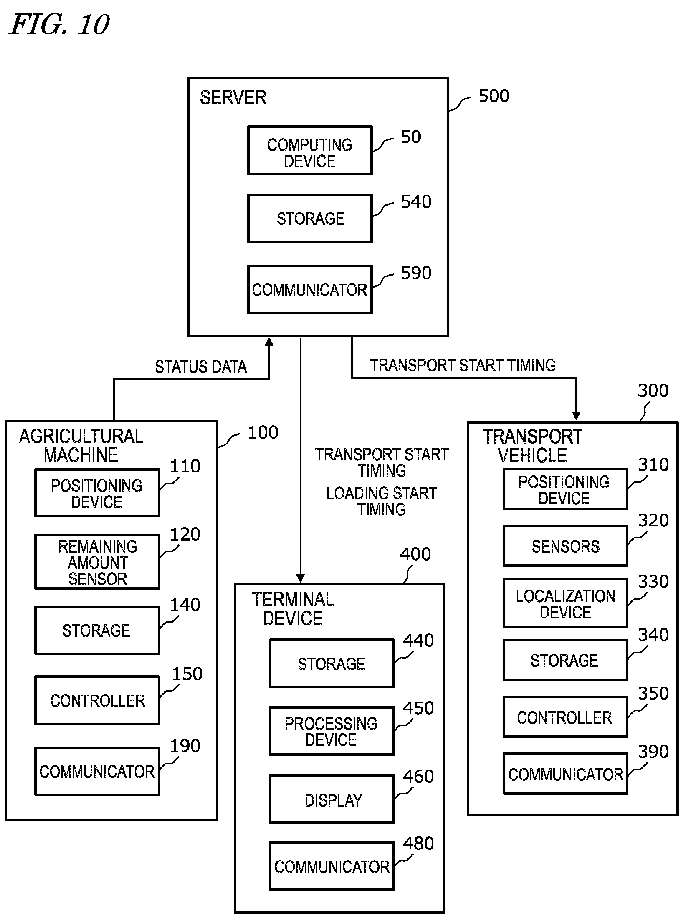

FIG. **10** is a block diagram showing still another example configuration for the material provision system. In addition to the agricultural machine **100,** the transport vehicle **300,** and the terminal device **400,** the material supply system shown in FIG. **10** includes a server **500.** In this example, the computing device **50** is mounted in or on the server **500.**

The server **500** is a computer that is provided in a remote place (e.g., a data center) from the agricultural machine **100,** the transport vehicle **300,** and the terminal device **400.** The server **500** communicates with the agricultural machine **100,** the transport vehicle **300,** and the terminal device **400** via telecommunication lines including the Internet, for example. The server **500** includes the computing device **50,** a storage **540,** and a communicator **590.** The storage **540** stores a computer program to be executed by the computing device **50,** data to be referred to by the computing device **50,** and data generated by the computing device **50.** The communicator **590** performs exchange of signals between itself and each of the agricultural machine **100,** the transport vehicle **300,** and the terminal device **400.**

In the example of FIG. **10****,** with the aforementioned method, the computing device **50** in the server **500** determines the transport start of the timing transport vehicle **300** and the loading start timing of the material. In other words, the computing device **50** determines the transport start timing based on: the consumption status of the material as estimated based on status data including a signal that is output from the positioning device **110** or the remaining amount sensor **120** of the agricultural machine **100;** and positional information of the storage location and the delivery location recorded in the storage **540.** Furthermore, the computing device **50** determines the loading start timing based on the transport start timing and the transport amount of the material to be transported by the transport vehicle **300.** The transport amount of the material to be transported by the transport vehicle **300** is previously set, and recorded in the storage **540.** The computing device **50** transmits information indicating the transport start timing to the transport vehicle **300,** via the communicator **590.** The computing device **50** transmits a notification including information of the loading start timing and the transport start timing to the terminal device **400,** via the communicator **590.** Based on the displayed information, the worker using the terminal device **400** begins loading of the material onto the transport vehicle **300.** After loading of the material is completed, the controller **350** of the transport vehicle **300** begins self-traveling toward the delivery location at the transport start timing as determined by the computing device **50.**

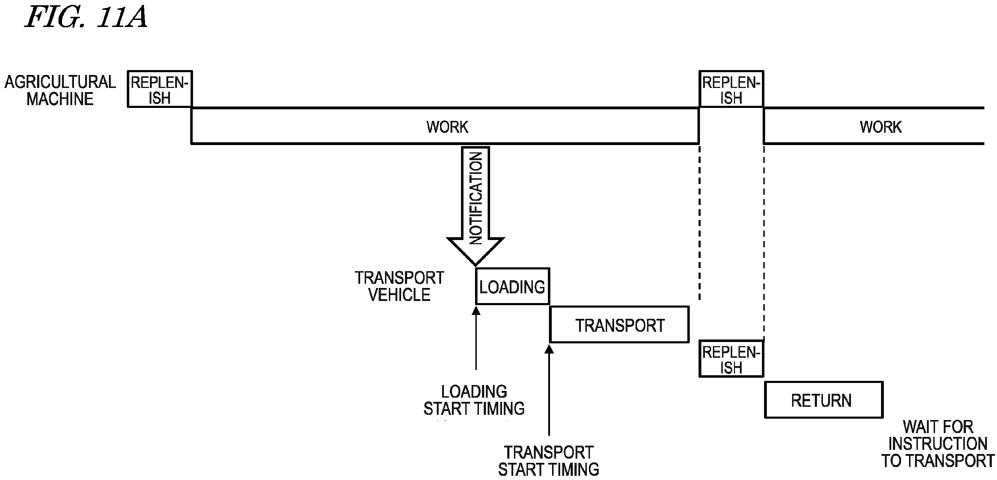

Next, with reference to FIG. **11A** to FIG. **11C****,** an example of an overall operation of the material supply system will be described.

FIG. **11A** is a diagram showing an example of an overall operation of the material supply system. In the example shown in FIG. **11A****,** the material supply system has the configuration shown in FIG. **8****.** The computing device **50** is mounted in or on the agricultural machine **100.** Once replenishing the material (e.g., seedlings) before the start of work, the agricultural machine **100** (e.g., a rice transplanter) begins tasked travel. During Work, from a previously-set work path, the traveling speed of the agricultural machine **100** during work, and the initially-carried amount of the material, the computing device **50** of the agricultural machine **100** can predict a point of time (time of depletion) and a geographical point (point of depletion) at which the material will become depleted. In particular, in a case where the traveling speed during work is previously determined, it is possible to estimate the time of depletion and the point of depletion before the agricultural machine **100** begins work. Based on the time of depletion, the estimated traveling time of the transport vehicle **300,** and the amount of material to be transported, the computing device **50** determines a transport start timing and a loading start timing. The computing device **50** provides a notification of the loading start timing and the transport start timing to the terminal device **400** that is used by a worker to perform loading work of the material at the storage location, and provides a notification of the transport start timing to the transport vehicle **300.** The worker performs loading work of the material onto the transport vehicle **300,** between the loading start timing and the transport start timing. After loading of the material is completed, the transport vehicle **300** begins transporting the material to the delivery location at the transport start timing.

Based on the estimated time of depletion of the material and the estimated traveling time of the transport vehicle **300,** the transport start timing is set to an appropriate point of time. Therefore, the transport vehicle **300** is able to arrive at the delivery location before the material carried on the agricultural machine **100** becomes depleted. If the material becomes depleted, the agricultural machine **100** stops work, and heads for the delivery location. At the delivery location, the material is taken down from the transport vehicle **300,** and the agricultural machine **100** is replenished with the material. The material replenishment operation may be performed by a driver of the agricultural machine **100** or an assistant, for example. When a person rides on the transport vehicle **300,** that person may perform the material replenishment operation. The material taken down from the transport vehicle **300** may be temporarily placed on a road or a furrow around the field. When the material replenishment is completed, the worker operates a smartphone or other devices to give a returning command to the transport vehicle **300.** Upon receiving the returning command, the transport vehicle **300** automatically returns to the storage location. On the other hand, the agricultural machine 100 goes back to the geographical point at which the work in the field was stopped, and restarts work. Once going back to the storage location, the transport vehicle **300** stands by until a notification is again received from the agricultural machine **100.** Upon again receiving a notification from the agricultural machine **100,** the transport vehicle **300** again performs the aforementioned operation. The foregoing operation is repeated.

The position of the delivery location may be changed as the work by the agricultural machine **100** progresses. The agricultural machine **100** moves over time, and in some cases may move between fields to perform work in another field. Accordingly, the computing device **50** may determine as the delivery location a place that will be near an estimated position (point of depletion) of the agricultural machine **100** at the time when the material becomes depleted. In that case, the agricultural machine **100** may send to the transport vehicle **300** a notification including positional information of the delivery location. Based on the notified positional information of the delivery location and an environment map stored in the storage **340,** the controller **350** of the transport vehicle **300** may set a path to the delivery location and perform self-traveling.

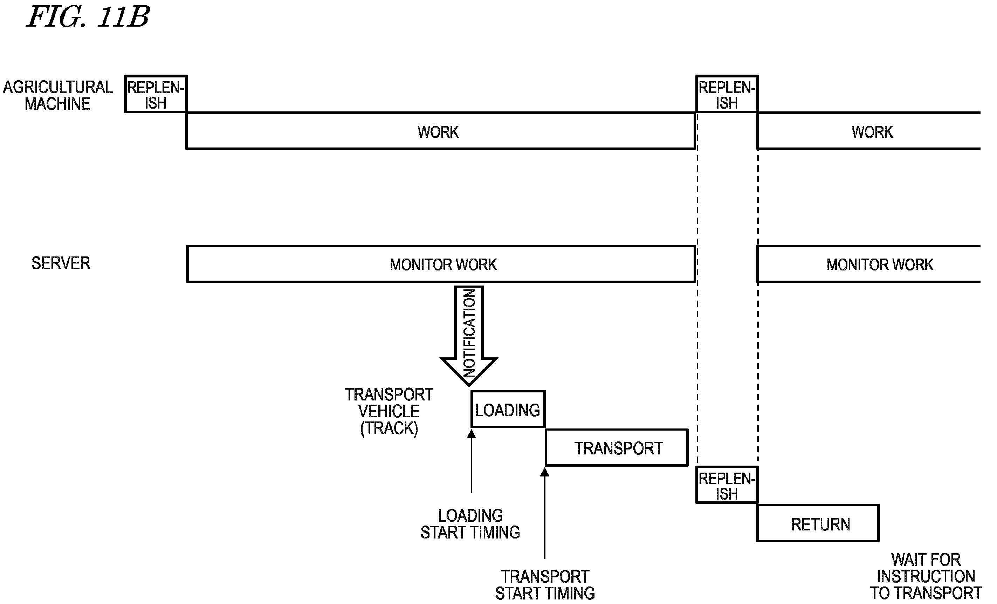

FIG. **11B** is a diagram showing an example of an overall operation of another example of the material supply system. In the example shown in FIG. **11B****,** the material supply system has the configuration shown in FIG. **10****.** The computing device **50** is mounted in or on the server **500.** In advance, information of an amount of material carried on the transport vehicle **300,** a transport time of the material, and a work path of the agricultural machine **100** is input to the server **500,** and such information is stored in the storage **540.** During work of the agricultural machine **100,** the server **500** consecutively acquires information such as the position of the agricultural machine **100,** and monitors whether the work by the agricultural machine **100** is progressing as planned. Based on the information consecutively acquired from the agricultural machine **100,** the computing device **50** of the server **500** determines a transport start timing and a loading start timing. The computing device **50** provides a notification of the loading start timing and the transport start timing to the terminal device **400** that is used by a worker to perform loading work of the material at the storage location, and provides a notification of the transport start timing to the transport vehicle **300.** The worker performs loading work of the material onto the transport vehicle **300,** between the loading start timing and the transport start timing. After loading of the material is completed, the transport vehicle **300** begins transporting the material to the delivery location at the transport start timing. The subsequent operation is identical to the operation in the example shown in FIG. **11A****.**

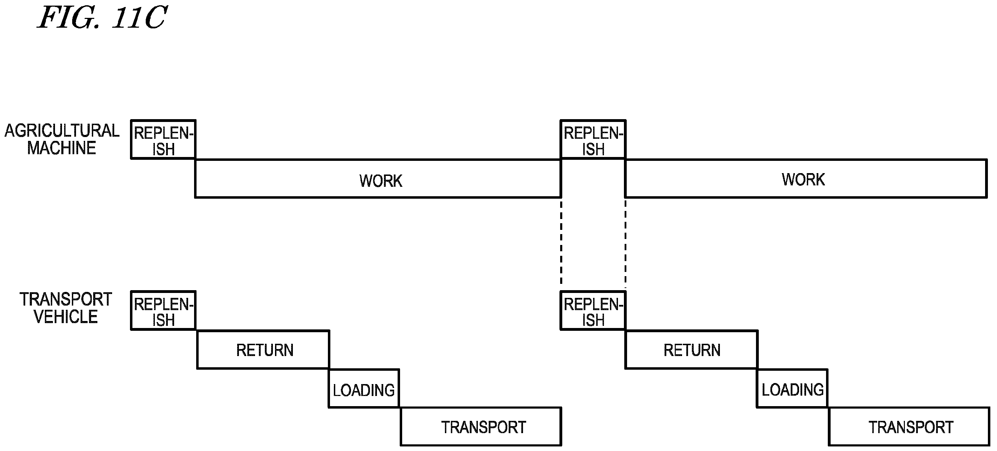

FIG. **11C** is a diagram showing an example of an overall operation in still another example of the material supply system. In the example shown in FIG. **11C****,** the material supply system has the configuration shown in FIG. **10****.** The computing device **50** is mounted in or on the transport vehicle **300.** The transport vehicle **300** in this example is configured to circulate through a predetermined route via self-traveling. The computing device **50** of the transport vehicle **300** consecutively acquires information of the position of the agricultural machine **100** and the like, and based on that information, estimates a geographical point and a point in time at which the material will become depleted next. The computing device **50** sets a delivery location near the estimated geographical point, and determines a transport start timing so that the delivery location will be arrived at before the time of depletion. In this example, the transport vehicle **300** begins transporting the material at the transport start timing that has been determined by itself, and once replenishment is completed and a returning command is received, the transport vehicle **300** automatically returns to the storage location. Once returning to the storage location, material is loaded onto the transport vehicle **300** for next replenishment. In this state, the transport vehicle **300** determines a next transport start timing and a next delivery location based on the state of the agricultural machine **100.** Thereafter, a similar operation is repeated.

In the example of FIG. **11C****,** the computing device **50** is mounted in or on the transport vehicle **300.** However, the computing device **50** may be mounted in or on the agricultural machine **100** or the server **500.** In that case, the computing device **50** may determine the transport start timing and the position of the delivery location, and, at the transport start timing, transmit to the transport vehicle **300** a traveling command including positional information of the delivery location. In response to the traveling command, the transport vehicle **300** begins transporting the material to the designated delivery location.

In the examples from FIG. **11A** to FIG. **11C****,** after completion of replenishment at the delivery location, the transport vehicle **300** goes back to the storage location. Alternatively, without going back to the storage location, it may halt, or head for another place. For example, after material replenishment is completed, the transport vehicle **300** may head for another delivery location in order to replenish the material for another agricultural machine. Moreover, it may not necessarily be while the transport vehicle **300** is standing by at the storage location that the transport vehicle **300** receives a command to start transportation. Even while the transport vehicle **300** is traveling, a command requesting that the material be transported at a specific point of time to a specific delivery location may be issued from the agricultural machine **100** or the server **500.** Moreover, during travel, the transport vehicle **300** may determine a timing and a delivery location for a next replenishment based on status data that is transmitted from the agricultural machine **100,** and control its own travel so as to reach the determined delivery location in a timely manner.

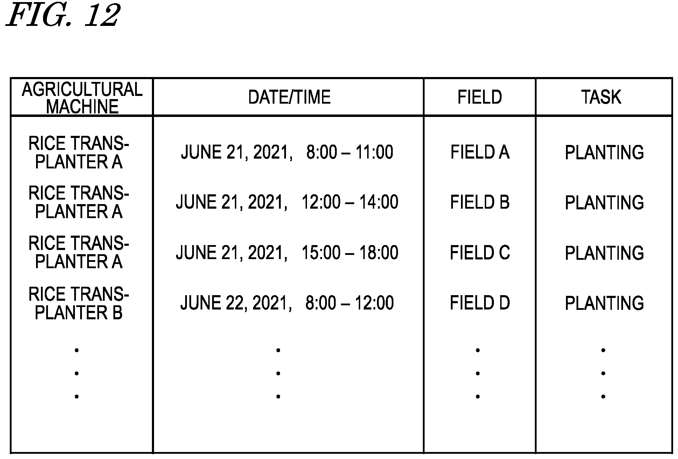

In the above embodiments, the agricultural machine 100 may travel via manual driving, or travel via self-driving. In the case where the agricultural machine **100** travels via self-driving, the agricultural machine **100** may travel in accordance with a previously-set work plan. As shown in FIG. **12****,** for example, the work plan may include information identifying the agricultural machine, work day, start time of work, end time of work, field, content of work, and the like. The work plan may include information of the work path and the work speed (i.e., traveling speed during work) of the agricultural machine **100.** In that case, the computing device **50** can estimate the consumption status of the material based on the previously-set work plan for the agricultural machine **100.** For example, based on the information of the work path and work speed of the agricultural machine **100** included in the work plan, the computing device **50** can estimate the consumption status of the material at each geographical point within the field. Based on the consumption status of the material thus estimated, the computing device **50** may determine the transport start timing and the loading start timing.

Hereinafter, a specific example of the configuration of the agricultural machine **100** in a case where the agricultural machine **100** is a rice transplanter that is capable of self-traveling will be described.

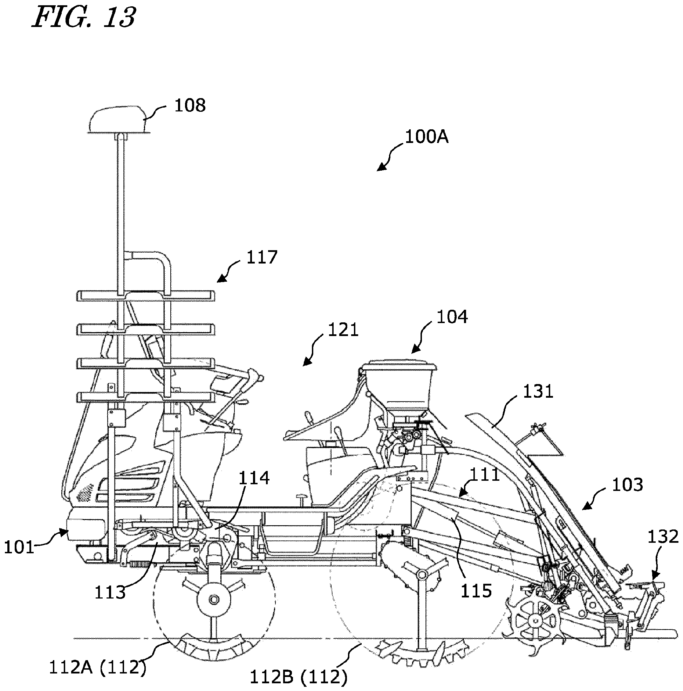

FIG. **13** is a side view showing an example configuration of a rice transplanter **100A** as an example of the agricultural machine **100.** The rice transplanter includes a machine body **101** that is of a riding type and four-wheel drive. The machine body **101** includes a link mechanism **111,** a lifting cylinder **115,** a seedling planting device **103,** and a manure spreading device **104.**

As a mechanism for traveling, the machine body **101** includes wheels **112,** an engine **113,** and a hydraulic continuously variable transmission **114.** The wheels **112** include steerable right and left front wheels **112A,** and right and left rear wheels **112B.** The engine **113** and the continuously variable transmission **114** are mounted at the front of the machine body **101.** Motive power from the engine **113** is supplied to the front wheels **112A,** the rear wheels **112B,** the seedling planting device **103,** and the manure spreading device **104** via the continuously variable transmission **114** and the like. The seedling planting device **103** includes a seedling platform **131** and a planting mechanism **132.**

The machine body **101** includes a driving section **121.** The driving section **121** includes a steering wheel, a main gear shift lever, a range gear shift lever, a task operation lever, a driver's seat, and the like. Furthermore, reserve seedling frames **117** to accommodate reserve seedlings are provided frontward of the driving section **121.** A positioning device **108** is provided above the reserve seedling frames **117.**

The positioning device **108** outputs positioning data to calculate the position and direction of the machine body **101.** The positioning device **108** includes a satellite positioning module to receive radio waves from GNSS satellites, and an inertial measurement module to detect the tilt and acceleration of the machine body **101** in three axes.

Other than the component elements shown in FIG. **13****,** the rice transplanter **100A** also includes a controller **150** (see FIG. **9****)** to control self-traveling and various sensors. The sensors may include sensors to detect states such as the steering angle, the operating positions of a main gear shift lever and a range gear shift lever, the vehicle speed, and the engine revolutions, and setting values therefor, for example. The sensors may also include sensors to detect states of the link mechanism **111,** the seedling planting device **103,** and the manure spreading device **104** and setting values therefor. For example, the sensors may include the remaining amount sensor **120** (see FIG. **9****)** to measure the remaining amount of an agricultural material, such as a remaining amount of seedlings or a remaining amount of fertilizer.

By controlling the steering angle of the front wheels **112A** and the continuously variable transmission **114,** the controller **150** changes the vehicle speed and traveling direction of the rice transplanter **100A.** Also, the controller **150** controls the amount of seedling to be taken by the seedling planting device **103** and the amount of manure to be spread by the manure spreading device **104.** Based on satellite positioning data that is consecutively sent from the positioning device **110,** the controller **150** calculates coordinates (ego-position) of the rice transplanter **100A** on the map. Based on the calculated ego-position and a previously-set target path, the controller **150** causes the rice transplanter **100A** to travel along the target path.

The rice transplanter **100A** is able to switch between a manual travel mode and a self-traveling mode. In the self-traveling mode, based on a lateral deviation and a directional deviation that are calculated through comparison between the ego-position and the target path, the controller **150** determines an amount of steering control so that the lateral deviation and directional deviation are reduced. Based on the determined amount of steering control, the steering angle of the front wheels **112A** is adjusted. Moreover, the controller **150** controls the traveling speed so that travel is performed at a speed that is equal to or below a previously-set reference speed. In the manual travel mode, based on a manipulated variable of the steering wheel, the controller **150** adjusts the steering angle of the front wheels **112A.** The controller **150** controls the continuously variable transmission **114** so that travel is performed at a traveling speed that is in accordance with the operating positions of the main gear shift lever and the range gear shift lever.

Thus, the present disclosure encompasses systems and methods as recited in the following Items.

[Item 1] A material supply system that causes a transport vehicle to supply an agricultural material for consumption by an agricultural machine in agricultural work, the material supply system comprising:
a computing device configured to determine a transport start timing for the transport vehicle toward a delivery location of the agricultural material, based on a consumption status of the agricultural material in an agricultural task by the agricultural machine in a field, a position of a storage location of the agricultural material, and a position of the delivery location.

[Item 2] The material supply system of Item 1, wherein the computing device
estimates a time of depletion at which the remaining amount of the agricultural material becomes smaller than a predetermined amount based on the consumption status of the agricultural material,
estimates a traveling time required by the transport vehicle in order to move to the delivery location based on a relative positioning of the storage location of the agricultural material and the delivery location of the agricultural material, and
determines the transport start timing based on the time of depletion and the traveling time.

[Item 3] The material supply system of Item 2, wherein the computing device determines as the transport start timing a timing before a point in time that is derived by subtracting the traveling time from the time of depletion.

[Item 4] The material supply system of any of Items 1 to 3, wherein the computing device transmits information indicating the transport start timing to a controller that controls self-driving of the transport vehicle.

[Item 5] The material supply system of any of Items 1 to 3, wherein the computing device determines a loading start timing at which to begin loading of the agricultural material onto the transport vehicle based on the transport start timing and a transport amount of the agricultural material to be transported by the transport vehicle.

[Item 6] The material supply system of Item 5, wherein the computing device
estimates a loading time required for loading the agricultural material onto the transport vehicle based on the transport amount, and
determines, as the loading start timing, a timing before a point in time that is derived by subtracting the loading time from the transport start timing.

[Item 7] The material supply system of Item 5, wherein the computing device provides a notification of the loading start timing to a terminal device that is used by a worker to perform the loading work.

[Item 8] The material supply system of any of Items 1 to 3, further comprising a controller configured to acquire information indicating the transport start timing and to control self-driving of the transport vehicle, wherein,
the controller, upon acquiring the information indicating the transport start timing, initiates self-traveling toward the delivery location at the transport start timing.

[Item 9] The material supply system of any of Items 1 to 3, wherein the computing device monitors a state of the agricultural machine, and estimates the consumption status of the agricultural material based on the state of the agricultural machine.

[Item 10] The material supply system of Item 9, wherein the computing device monitors a position and a moving speed of the agricultural machine, and estimates the consumption status of the agricultural material based on the position and the moving speed of the agricultural machine.

[Item 11] The material supply system of any of Items 1 to 3, wherein the computing device estimates the consumption status of the agricultural material based on a previously-set work plan of the agricultural machine.

[Item 12] The material supply system of Item 11, wherein the computing device estimates the consumption status of the agricultural material based on information of a work path and a work speed of the agricultural machine included in the work plan.

[Item 13] The material supply system of any of Items 1 to 3, wherein the computing device
estimates a point of depletion at which the remaining amount of the agricultural material becomes smaller than a predetermined amount, based on the consumption status of the agricultural material, a work path of the agricultural machine, and a position and a moving speed of the agricultural machine, and
determines the delivery location in accordance with the point of depletion.

[Item 14] The material supply system of Item 8, wherein, based on a previously-set operating schedule of the transport vehicle, the controller controls self-traveling of the transport vehicle to circulate through a route that includes the storage location and the delivery location.

[Item 15] The material supply system of Item 8, wherein, after unloading of the agricultural material from the transport vehicle is completed at the delivery location, the controller initiates self-traveling from the delivery location to the storage location, in response to a command from a device that is operated by a user.

[Item 16] The material supply system of Item 8, wherein the controller initiates self-traveling to the delivery location, upon receiving a notification that loading of the agricultural material onto the transport vehicle at the storage location has been completed and upon acquiring information indicating the transport start timing.

[Item 17] The material supply system of any of Items 1 to 3, wherein the computing device is mounted in or on the agricultural machine, in a computer that communicates with the agricultural machine, or in the transport vehicle.

[Item 18] The material supply system of any of Items 1 to 3, wherein,
the agricultural material comprises seedlings of a plant; and
the agricultural machine is a transplanter that travels while planting seedlings of the plant in a field.

[Item 19] A method of causing a transport vehicle to supply an agricultural material for consumption by an agricultural machine in agricultural work, the method comprising:
acquiring information of a consumption status of the agricultural material in an agricultural task by the agricultural machine in a field, information of a position of a storage location of the agricultural material, and information of a position of a delivery location of the agricultural material;
based on the consumption status of the agricultural material, the position of the storage location, and the position of the delivery location, determining a transport start timing for the transport vehicle toward the delivery location; and
providing information indicating the transport start timing for a controller to control self-driving of the transport vehicle.

### INDUSTRIAL APPLICABILITY

The technique according to the present disclosure is applicable to a material supply system for an agricultural machine that performs agricultural work while consuming an agricultural material, e.g., a rice transplanter, a vegetable transplanter, a tractor, a spreader, a seeder, and a chemical sprayer, for example.

### REFERENCE SIGNS LIST

**10:** material supply system, **50:** computing device, **62:** storage location, **64:** delivery location, **70:** field, **82:** agricultural material, **100:** agricultural machine, **110:** positioning device, **120:** remaining amount sensor, **140:** storage, **150:** controller, **190:** communicator, **300:** transport vehicle, **310:** positioning device, **320:** sensors, **330:** localization device, **340:** storage, **350:** controller, **390:** communicator, **400:** terminal device, **440:** storage, **450:** processing device, **460:** display, **480:** communicator, **500:** server, **540:** storage, **590:** communicator

## Claims

1. A material supply system that causes a transport vehicle to supply an agricultural material for consumption by an agricultural machine in agricultural work, the material supply system comprising:
a computing device configured to determine a transport start timing for the transport vehicle toward a delivery location of the agricultural material, based on a consumption status of the agricultural material in an agricultural task by the agricultural machine in a field, a position of a storage location of the agricultural material, and a position of the delivery location.

2. The material supply system of claim 1, wherein the computing device
estimates a time of depletion at which the remaining amount of the agricultural material becomes smaller than a predetermined amount based on the consumption status of the agricultural material,
estimates a traveling time required by the transport vehicle in order to move to the delivery location based on a relative positioning of the storage location of the agricultural material and the delivery location of the agricultural material, and
determines the transport start timing based on the time of depletion and the traveling time.

3. The material supply system of claim 2, wherein the computing device determines, as the transport start timing, a timing before a point in time that is derived by subtracting the traveling time from the time of depletion.

4. The material supply system of any of claims 1 to 3, wherein the computing device transmits information indicating the transport start timing to a controller that controls self-driving of the transport vehicle.

5. The material supply system of any of claims 1 to 3, wherein the computing device determines a loading start timing at which to begin loading of the agricultural material onto the transport vehicle based on the transport start timing and a transport amount of the agricultural material to be transported by the transport vehicle.

6. The material supply system of claim 5, wherein the computing device
estimates a loading time required for loading the agricultural material onto the transport vehicle based on the transport amount, and
determines, as the loading start timing, a timing before a point in time that is derived by subtracting the loading time from the transport start timing.

7. The material supply system of claim 5, wherein the computing device provides a notification of the loading start timing to a terminal device that is used by a worker to perform the loading work.

8. The material supply system of any of claims 1 to 3, further comprising a controller configured to acquire information indicating the transport start timing and to control self-driving of the transport vehicle, wherein,
the controller, upon acquiring the information indicating the transport start timing, initiates self-traveling toward the delivery location at the transport start timing.

9. The material supply system of any of claims 1 to 3, wherein the computing device monitors a state of the agricultural machine, and estimates the consumption status of the agricultural material based on the state of the agricultural machine.

10. The material supply system of claim 9, wherein the computing device monitors a position and a moving speed of the agricultural machine, and estimates the consumption status of the agricultural material based on the position and the moving speed of the agricultural machine.

11. The material supply system of any of claims 1 to 3, wherein the computing device estimates the consumption status of the agricultural material based on a previously-set work plan of the agricultural machine.

12. The material supply system of claim 11, wherein the computing device estimates the consumption status of the agricultural material based on information of a work path and a work speed of the agricultural machine included in the work plan.

13. The material supply system of any of claims 1 to 3, wherein the computing device
estimates a point of depletion at which the remaining amount of the agricultural material becomes smaller than a predetermined amount, based on the consumption status of the agricultural material, a work path of the agricultural machine, and a position and a moving speed of the agricultural machine, and
determines the delivery location in accordance with the point of depletion.

14. The material supply system of claim 8, wherein, based on a previously-set operating schedule of the transport vehicle, the controller controls self-traveling of the transport vehicle to circulate through a route that includes the storage location and the delivery location.

15. The material supply system of claim 8, wherein, after unloading of the agricultural material from the transport vehicle is completed at the delivery location, the controller initiates self-traveling from the delivery location to the storage location, in response to a command from a device that is operated by a user.

16. The material supply system of claim 8, wherein the controller initiates self-traveling to the delivery location, upon receiving a notification that loading of the agricultural material onto the transport vehicle at the storage location has been completed and upon acquiring information indicating the transport start timing.

17. The material supply system of any of claims 1 to 3, wherein the computing device is mounted in or on the agricultural machine, in a computer that communicates with the agricultural machine, or in the transport vehicle.

18. The material supply system of any of claims 1 to 3, wherein,
the agricultural material comprises seedlings of a plant; and
the agricultural machine is a transplanter that travels while planting seedlings of the plant in a field.

19. A method of causing a transport vehicle to supply an agricultural material for consumption by an agricultural machine in agricultural work, the method comprising:
acquiring information of a consumption status of the agricultural material in an agricultural task by the agricultural machine in a field, information of a position of a storage location of the agricultural material, and information of a position of a delivery location of the agricultural material;
based on the consumption status of the agricultural material, the position of the storage location, and the position of the delivery location, determining a transport start timing for the transport vehicle toward the delivery location; and
providing information indicating the transport start timing for a controller to control self-driving of the transport vehicle.
